# EUROPEAN PATENT APPLICATION

(11) **EP 1 477 399 A1**
(43) Date of publication of application: **17.11.2004**
(21) Application number: 03405333.0
(22) Date of filing: 13.05.2003
(51) Int. Cl.: B63B 1/04

(54) **Hump boat**

(71) Applicant: Mass, Romer, Davenport, Iowa (US)
(72) Inventor: Mass, Romer, Davenport, Iowa (US)
(74) Representative: Savatier, Yves

(57) **Abstract**

A water vessel (10) containing a central hump or dome (22) underneath the vessel, with a waterjet system (30) pumping water downward into the hump. The invention utilizes waterjet propulsion and hull shape to create water hump lift. A waterjet system (30) pumps water from the front of the vessel downward into the hump underneath the center of the vessel. This produces lift and reduces the water friction against the water vessel. This also creates a wave or hump of water beneath the vessel, enabling the vessel to ride down the resulting wave. The size and shape of the water hump depends on the velocity and angle of the waterjets. Baffles (42,44) are utilized at the front and sides of the water vessel to direct water away from the vessel, or towards the vessel, as needed to further the efficiency of the system.

## Description

### CROSS-REFERENCE TO RELATED APPLICATIONS

This application is a continuation of co-pending commonly owned U.S. Provisional Application No. 60-311,617, filed August 10, 2001, entitled Hump Boat. Priority is claimed under 35 U.S.C. §119(e). The contents of the same are expressly incorporated herein by reference.

### STATEMENT REGARDING FEDERALLY SPONSORED RESEARCH OR DEVELOPMENT

Not Applicable

### REFERENCE TO MICROFICHE APPENDIX

Not Applicable

### BACKGROUND OF THE INVENTION

### Field of the Invention

This present invention relates to the field of modified hulls, and more particularly to hulls raised to decrease water resistance.

### Description of the Related Art

Low-water resistance hulls are well known in the art. Typical low-water resistance hulls are structured to create air pockets beneath a water vessel. Typical low-water resistance hulls do not have a hull that rises toward the stern of said vessel and contains a central groove, in combination with a waterjet propulsion mechanism and front and side baffles for directing water surrounding said vessel.

As can be seen by reference to the following U.S. Patent Nos. 3,875,885, and 5,231,946, the prior art is replete with planing hulls combined with a propulsion system to lessen water resistance. Patent number 5,231,946, titled "Monohull Fast Sealift Or Simi-Planing Monohull Ship", is an invention designed to plane across the waves, and contains waterjet propulsion jets, but the invention is distinguished from the present invention by the lack of a central groove under the hull in combination with waterjets propulsing water downward. In addition, U.S. patent No. 3,875,885 titled "Gas Injection Propulsion System For Marine Vehicles", is also an invention designed to move air beneath the hull, but the invention also lacks a central groove under the hull in combination with waterjets propulsing water downward.

While all of the aforementioned prior art constructions are more than adequate for the basic purpose and function for which they have been specifically designed, they are uniformly deficient with respect to their failure to provide a central groove under the hull in combination with waterjets propulsing water downward.

As a consequence of the foregoing situation, there has existed a longstanding need for a new and improved water vessel utilizing waterjet propulsion and hull shape to create a hump lift whereby the bottom of the vessel's hull rises toward the stem, and the provision of such a construction is a stated objective of the present invention.

### BRIEF SUMMARY OF THE INVENTION

Briefly stated, the present invention provides a water vessel utilizing waterjet propulsion and hull shape to create a hump lift whereby the bottom of the vessel's hull rises toward the stem, as will be explained in greater detail further on in the specification. The present invention contains a divided hull with a groove underneath the central portion of the hull. A waterjet system pumps water from the front of the vessel downward into the groove underneath the center of the vessel. This produces lift and reduces the water friction against the water vessel. This also creates a wave or hump of water beneath the vessel, enabling the vessel to ride down the resulting wave. The size and shape of the water hump depends on the velocity and angle of the waterjets.

Baffles are preferably positioned at the front and sides of the water vessel to direct water away from the vessel, or towards the vessel, as needed to further the efficiency of the system. If the pump has insufficient water flow, the front baffles will direct water towards the pump intake area. Conversely, if the pump is receiving too much water volume, the baffles will direct water flow away from the forward pump. The baffles also are preferably used for further reducing the volume of water that the vessel is required to displace in traversing through the water. Bow baffles preferably also help to steer the vessel.

### BRIEF DESCRIPTION OF THE SEVERAL VIEWS OF THE DRAWING

These and other attributes of the invention will become more clear upon a thorough study of the following description of the best mode for carrying out the invention, particularly when reviewed in conjunction with the drawings, wherein:
FIG.1 is a perspective view of a device embodying the concepts of the present invention, with a portion of the top of the hull cut away;
FIG. 2 is a perspective view of the front of the present invention, with diagrams showing operation of baffles;
FIG. 3 is a perspective view of the bottom of the present invention, with a portion of the bottom hull cut away to show a waterjet propulsion system;
FIG. 4 is a perspective view of a front intake valve for a waterjet system for the present invention;
FIG. 5 is a perspective view of the side of the present invention with a portion of the side of the hull cut away to show the operation of a waterjet system;
FIG. 6 is a perspective view of the side of the present invention with a portion of the side of the hull cut away to show water flow towards the front of the hull;
FIG. 7 is a perspective view of the parts of a baffle displayed;
FIG. 8 is a perspective view of a baffle on the side of the vessel in the open position.
FIG. 9 is a side elevational view of a tilt level gauge for the present invention;
FIG. 10 is a side elevational view of the present invention pulling a barge;
FIG. 11 is a plan view of the present invention pulling a barge;
FIG. 12 is a plan view of a cargo-carrying version of the present invention, with the portion underneath the deck exposed;
FIG. 13 is a side elevational view of a cargo-carrying version of the present invention;
FIG. 14 is an elevational view of a groove in the hull of the present invention for the protection of jet nozzles;
FIG. 15 is a plan view of a passenger-carrying version of the present invention, with the portion underneath the deck exposed; and
FIG. 16 is a side elevational view of a passenger-carrying version of the present invention.

### DETAILED DESCRIPTION OF THE INVENTION

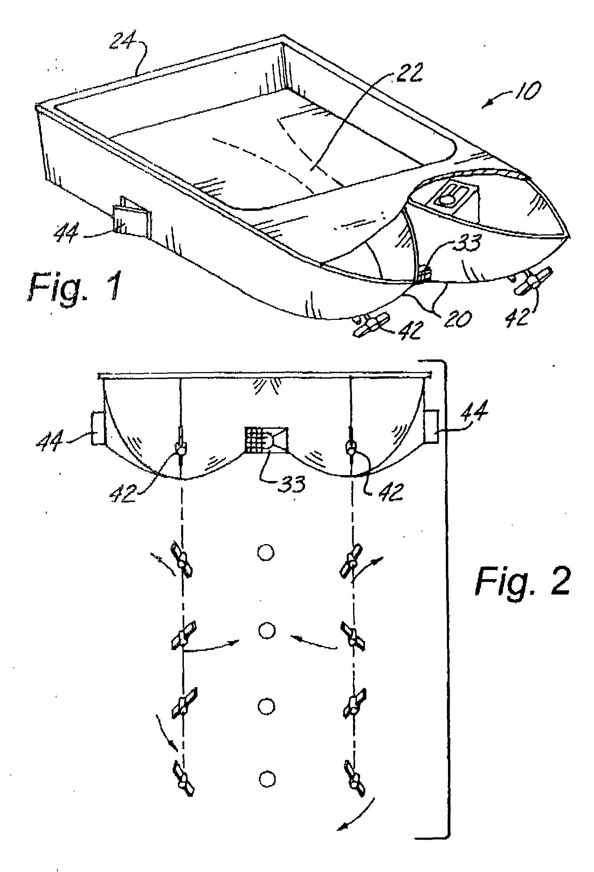

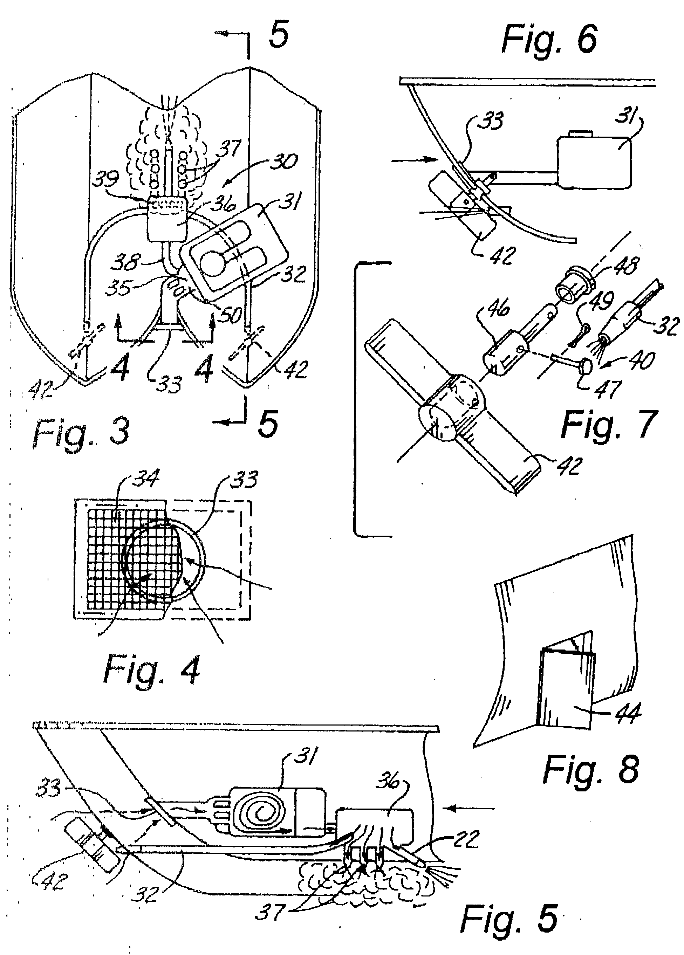

As can be seen by reference to the drawings, and particular to FIG. 1, the water vessel utilizing waterjet propulsion and hull shape to create water hump lift whereby the bottom of the vessel's hull rises toward the stem that forms the basis of the present invention is designated generally by the reference number **10**. A water vessel **10** embodying the present invention is composed of a double bow **20** with a grove in the hull **22**, a waterjet system **30** (FIG. 3), and baffles **40** (FIG. 7).

As shown in FIG. 1, the bow of the vessel **20** preferably is a double bow, and the hull of the vessel preferably contains a central dome groove **22**, that extends upwardly between the bow **20** and the stem **24** of the vessel **10**. The vessel **10** preferably contains a baffle **42** positioned in front of each branch of the bow **20**. Preferably, the forward baffles **42** are attached to the vessel **10** by a pin **46**, and the pin **46** is preferably secured to the vessel **10** with a locking nut **48**. The vane **45** of the forward baffle **42** preferably interlocks securely to the pin **46** by a lock pin **47** with its securing clip **49**.

The waterjet system **30** preferably includes forward nozzles **32**, a water intake opening **33**, a water pump **35**, a pressure chamber **36**, and exit jet nozzles **37**. Preferably, the forward nozzles **32** are disposed on the bow **20** of the vessel **10** adjacent to the bow baffles **42**. The forward nozzles **32** are preferably reverse jets and are connected to the pressure chamber **36**. The water intake opening **33** is preferably disposed centrally between the branches of the bow **20**. The water intake opening **33** preferably contains a grid **34** securely disposed as a cover over the opening **33**. The water pump **35** is preferably centrally located with the hull of the vessel **10** posterior to the water intake opening **33**. Pipes **38** are preferably disposed between the pump **35** and the pressure chamber **36**. The pressure chamber **36** is preferably located centrally within the hull of the vessel **10**. The exit jet nozzles **37** are preferably disposed posterior to the pressure chamber **36**, with the exit jet nozzles **37** extending downwardly at various angles or straight down. The exit jet nozzles **37** preferably are disposed within the central groove **22** within the hull.

In use, water enters the intake opening **33** in the hull of the vessel **10**. The intake opening **33** is covered by a grid **34** to keep sticks and large stones from entering the opening **33**. Water is then piped without the use of valves to the pump **35**. The pump **35** is preferably a centrifugal pump **35**. Water preferably goes into the center of the pump **35**, and the water is preferably directed to the periphery of the pump **35**, where the water exits the pump **35**. A clutch **50** is preferably required to disengage the pump **35** motor when starting the motor **31**. Water is pumped to the pressure chamber **36**, which is a tank.

Preferably, multiple variable flow valves **39** are disposed on the tank **36** wall. The variable flow valves **39** are preferably variable from fully closed to fully open. From the pressure chamber **36**, the water is dispensed through the variable flow valves **39**, then to exit jet nozzles **37**. Preferably, the forward nozzles **32** are aligned with the long axis of the boat **10**. The exit jet nozzles **37** are preferably fixed at various exit angles, and blended together in operation to form a composite push for the most economical level of glide travel. The blended amount of various fixed angle jet streams determines where a hump of water will be under the boat **10**. The depth, volume, and push of the blended jet streams will depend on the speed of the pump **35**.

Baffles **42** positioned at the front of the water vessel **10** preferably direct water away from the vessel **10**, or towards the vessel **10**, as needed to further the efficiency of the system **10**. If the pump **35** has insufficient water flow, the baffles **42** will direct water towards the pump intake area **33**. Conversely, if the pump **35** is receiving too much water volume, the baffles **42** will direct water flow away from the pump **35**. The baffles **42** also are preferably used for further reducing the volume of water that the vessel **10** is required to displace in traversing through the water. In addition, the bow baffles **42** preferably help to steer the vessel.

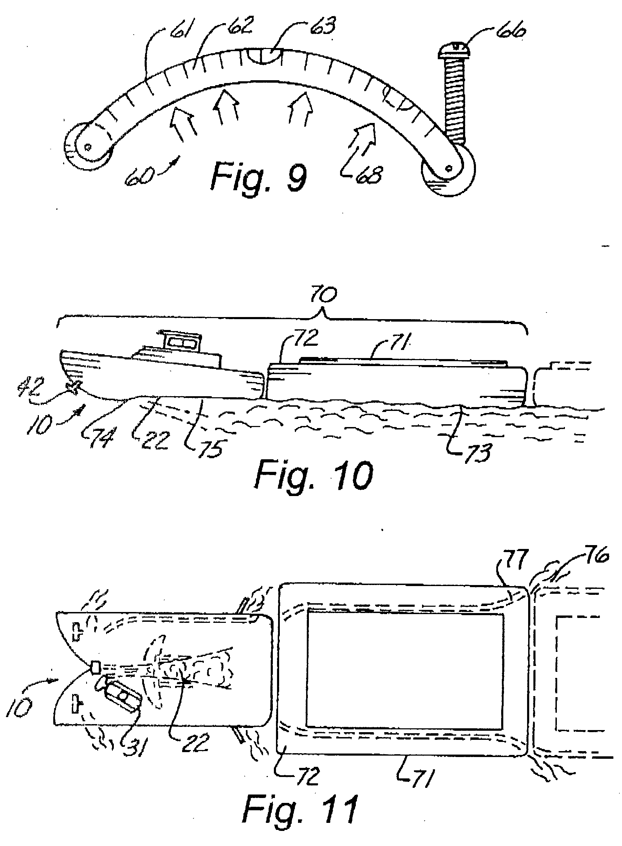

In FIG. 9, an embodiment of the present invention contains a tilt level gauge **60** which is mounted on the vessel **10**. The gauge **60** contains a clear curved tube **61** containing liquid **62** and an air bubble **63** for gauging the fore and aft tilt of the boat. The gauge **60** has a hinge **64** at one end and a height adjusting mechanism **66** at the other end. Movable pointers **68** indicate, for example, the level point at dockside when the vessel is unloaded, the tilt at dockside with the vessel loaded, and the low, high, and estimated average tilt when traveling in rough water.

FIGs. 10 and 11 shows the present invention **10** pulling a barge **71**. The vessel **10** pulls the barge bow **72** down so as to tilt the barge bottom **73** into bow down, stem high position. A power jet **74** is angled to thrust the rising water hump **75** under the boat-barge combination **70**, making the whole unit slide forward. High pressure water hoses **77** strung to the back of the barges **71** and connected to directional down spout pipes **76** help with the steering of the hump boat barge unit **70**. The barge **71** has a concave bottom **73** to help contain the rising water hump **75** that the vessel **10** slides off of.

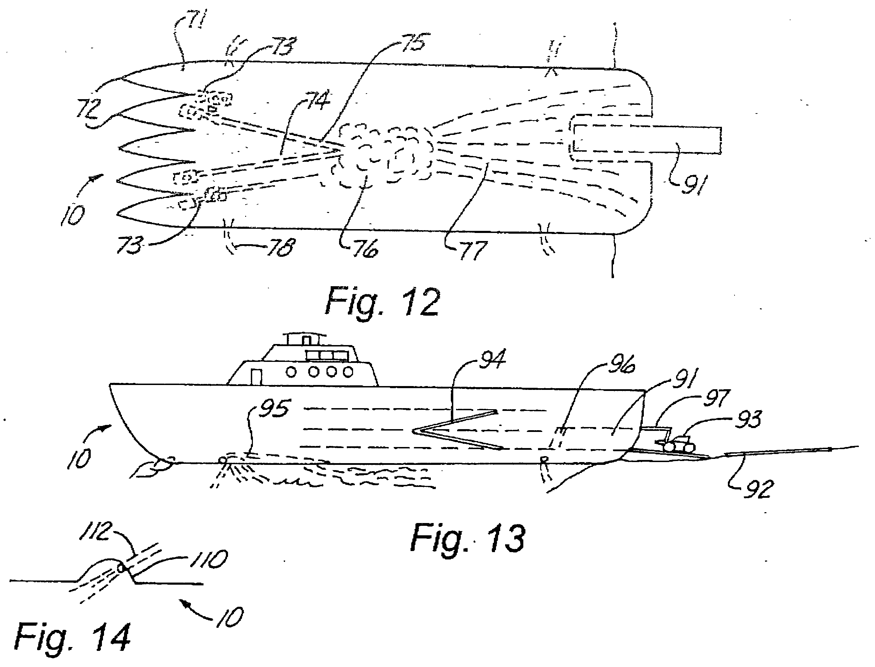

In FIGs. 12, 13, and 14 a cargo-carrying embodiment of the present invention is displayed. In FIG. 12, the bow **81** is shown with a plurality of branches **82**, with a pump **83** at each juncture between bow branches **82**. The pumps **83** converge their jet streams **84** into the groove **85** to form a common hump of water **86**, with glide water **87** behind the hump **86**, resulting from the vessel **10** gliding over the hump of water **86**. A jet **88** from the side of the vessel **10** is shown for steering the vessel **10**. In FIG. 13, a ramp **91** is shown at the rear end of the vessel **10** onto a beach **92** for removal of cargo, and a forklift **93** is shown leaving the vessel **10**. Internal ramps **94** inside the vessel **10** are shown. The groove **95** underneath the vessel **10** is visible. A water sealed door **96** and a door flap **97** accommodate the ramp **91**. In FIG. 14, a groove **110** is shown in the vessel **10** for protecting the jet nozzles **112**.

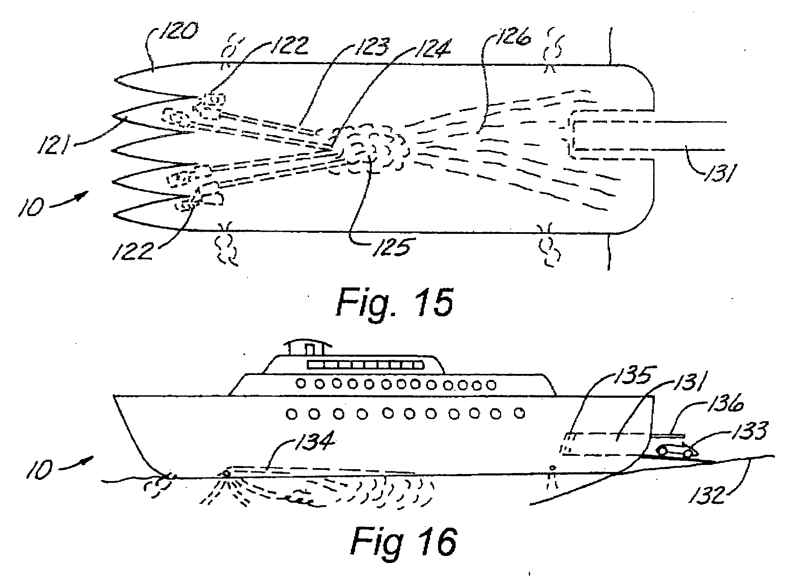

In FIGs. 15, 16 a passenger-carrying embodiment of the present invention is displayed. In FIG. 15, the bow **120** is shown with a plurality of branches **121**, with a pump **122** at each juncture between bow branches **121**. The pumps **122** converge their jet streams **123** into the groove **124** to form a common hump of water **125**, with glide water **126** behind the hump **125**, resulting from the vessel **10** gliding over the hump of water **125**. In FIG. 16, a ramp **131** is shown at the rear end of the vessel **10** onto a beach **132** for removal of passengers and cargo, and a passenger vehicle **133** is shown leaving the vessel **10**. The groove **134** underneath the vessel **10** is visible. A water sealed door **135** and a door flap **136** accommodate the ramp **131**.

Although only an exemplary embodiment of the invention has been described in detail above, those skilled in the art will readily appreciate that many modifications are possible without materially departing from the novel teachings and advantages of this invention. Accordingly, all such modifications are intended to be included within the scope of this invention as defined in the following claims.

## Claims

1. A water vessel, comprising:
a hull disposed with a central dome hump groove extending fore to aft on the underside of said vessel, said dome hump groove widening as it extends from fore to aft;
a water intake opening disposed at the center of the bow of said vessel;
reverse jet nozzles disposed on the bow of said vessel, and aligned with the long axis of said vessel;
a water pump disposed posterior to said water intake opening;
a pressure chamber connectably disposed to the water pump and the reverse jet nozzles;
output water jet nozzles connectably disposed to said pressure chamber and extending downwardly at a plurality of angles into said central dome hump groove; and
baffles for directing water surrounding said vessel, connectably disposed to the bow and the sides of said vessel.

2. The water vessel of claim 1, wherein the bow of said vessel contains a plurality of branches.

3. The water vessel of claim 1, wherein said side baffles are comprised of panels which open and close outwardly from the side of said vessel.

4. A water vessel, comprising:
a hull disposed with a dome hump or central groove on the underside of said vessel;
a water intake opening disposed at the center of the bow of said vessel;
reverse jet nozzles disposed on the bow of said vessel, and aligned with the long axis of said vessel;
a water pump disposed posterior to said water intake opening;
a pressure chamber connectably disposed to the water pump and the reverse jet nozzles;
output water jet nozzles connectably disposed to said pressure chamber and extending downwardly at a plurality of angles into said central groove; and
baffles for directing water surrounding said vessel, connectably disposed to the bow and the sides of said vessel, wherein said bow baffles are comprised of
adjustable vanes for directing the flow of water;
a connecting pin for connecting said vane to said vessel;
a locking nut for securing said connecting pin to said vessel;
a lock pin for securing said vane to said pin; and
a clip for securing said lock pin to said vane.

5. The water vessel of claim 1, wherein said water intake opening contains a grid cover for preventing debris from entering said water intake opening.

6. The water vessel of claim 1, wherein variable rate flow valves are disposed on said pressure chamber.

7. The water vessel of claim 1, wherein a water pump motor is coupled to said water pump, and a clutch coupled to said motor disengages the pump when starting said motor.

8. A water vessel, comprising:
a hull disposed with a dome hump or central groove on the underside of said vessel;
a water intake opening disposed at the center of the bow of said vessel;
reverse jet nozzles disposed on the bow of said vessel, and aligned with the long axis of said vessel;
a water pump disposed posterior to said water intake opening;
a pressure chamber connectably disposed to the water pump and the reverse jet nozzles;
output water jet nozzles connectably disposed to said pressure chamber and extending downwardly at a plurality of angles into said central groove;
baffles for directing water surrounding said vessel, connectably disposed to the bow and the sides of said vessel; and
a clear curved tube containing liquid and an air bubble for gauging tilt, having a hinge on one end and a height adjusting mechanism at the other end, and having movable pointers to indicate tilt, is disposed on said water vessel.

9. The water vessel of claim 1, wherein the bow of said water vessel contains greater than two branches, said vessel contains a plurality of grooves in its hull to protect said jet nozzles, said vessel contains an inner chamber with ramps for storage, and a water sealable door on the stern of said vessel, wherein said water sealable door is operably disposed as a ramp for emptying said chamber in said vessel.

10. The water vessel of claim 1, wherein said dome hump groove rises toward the water vessel stem.
